# EUROPEAN PATENT APPLICATION

(11) **EP 4 035 822 A1**
(43) Date of publication of application: **03.08.2022**
(21) Application number: 21154344.2
(22) Date of filing: 29.01.2021
(51) Int. Cl.: B23K 26/064, B23K 26/08, B23K 26/14, B23K 26/38, B23K 26/70

(54) **LASER CUTTING MACHINE**

(71) Applicant: Bystronic Laser AG, 3362 Niederönz (CH)
(72) Inventor: WORATZ, Colin, 3012 Bern (CH)
(74) Representative: Frei Patent Attorneys

(57) **Abstract**

The laser cutting head has an interface for receiving laser radiation and defines a beam path. The laser cutting head further has a laser machining nozzle (11) through which the laser beam is directed onto the workpiece (12). The laser machining nozzle may be exchangeable. It is arranged at a workpiece side of the laser cutting head. The laser machining nozzle has a port (35) for receiving a gas flow and has at least one gas channel (32) for directing the gas flow onto the workpiece (12) and thereby works as gas jet ejecting nozzle. According to an aspect of the present invention, the nozzle also has an optical aperture (34) for stopping marginal radiation portions.

## Description

### FIELD OF THE INVENTION

The invention is in the field of laser cutting of workpieces.

### BACKGROUND OF THE INVENTION

In laser cutting of metal workpieces, a directed laser beam moves relative to the metal workpiece to locally melt the metal material at the position of incidence of the laser beam on the workpiece. This produces a laser cut. Modern laser cutting machines also direct a gas jet onto the position of incidence of the laser beam. The gas jet may assist the removal ("blowing") of molten metal material (fusion cutting) and/or, if it contains molecular oxygen, may be involved in a chemical reaction ("burning"; reactive cutting). Both, the removal and, if applicable, the chemical reaction, help to generate a good cutting kerf.

While a laser cutting machine usually should be equipped for both, fusion cutting and reactive cutting, the beam requirements differ between these two methods. Especially, for reactive cutting, the beam should be as focused and uniform as possible, without any scatter and without a marginal portion of reduced intensity. For other processes, including fusion cutting, however, it is desirable to have as much power input onto the workpiece as possible, whereby it is desirable to not have some of the marginal beam portions cut off. It has therefore already been proposed in literature to provide measures for influencing the beam properties depending on the cutting mode used. For example, JP 2016/043392 discloses a laser cutting machine with an aperture the position of which is adjustable depending on the cutting mode.

### SUMMARY OF THE INVENTION

It is an object of the present invention to provide a laser cutting machine overcoming drawbacks of prior art cutting machines and being equipped to emit a laser beam of desired high quality while being of a construction having reduced or at least not substantially enhanced complexity compared to the prior art.

This object is achieved by a laser cutting machine and a laser cutting head as defined in the claims.

The laser cutting head has an interface for receiving laser radiation and defines a beam path. It may comprise a beam shaping installation, i.e., for example a collimation optics. The laser cutting head further has a laser machining nozzle through which the laser beam is directed onto the workpiece. The laser machining nozzle may be exchangeable. It is arranged at a workpiece side of the laser cutting head, i.e., in a configuration in which the workpiece lies on a support ('working table'), and in which the beam acts from above the workpiece, the workpiece side is the lower side. The laser machining nozzle has a port for receiving a gas flow and has at least one gas channel for directing the gas flow onto the workpiece and thereby works as gas jet ejecting nozzle. According to an aspect of the present invention, the nozzle also has an optical aperture for stopping (in other words: for cutting off) undesired marginal radiation portions (scattered radiation, marginal portions of the laser itself; "parasitic radiation").

In contrast to the prior art, therefore, an optical aperture is provided by the laser machining nozzle itself - thus by the part that is closest to the workpiece. This has the substantial advantage that all diffusions that may arise on the path between the interface and the workpiece are taken account of, and all radiation subject to such diffusion may be cut off.

Also, laser machining nozzles are usually low-cost expendable items and are thus suitable for being exchanged between working cycles with different requirements to the laser beam. This yields a particularly simple possibility of adjusting laser beam properties without any sophisticated mechanics with additional moving parts: The laser beam properties may simply be adjusted by choosing and mounting the appropriate nozzle with the desired location and dimension of the optical aperture as well as desired nozzle dimensions.

The laser machining nozzle may be one-piece and may be of a suitable material, especially a metal. It is possible, though that the laser machining nozzle is compounded of several parts, which, however, may be separate from (i.e. not one-piece with) a laser head body that may comprise a laser head housing.

According to the prior art, the laser machining nozzle was designed such that any radiation absorption by the laser machining nozzle was avoided. In contrast thereto, the present invention proposes to use the laser machining nozzle in a new way, by also using it as an optical aperture.

In embodiments, the laser machining nozzle is equipped to be cooled, especially by liquid cooling (water cooling). To this end, it may comprise one or more cooling channels for a cooling liquid to circulate, as well as ports for injecting the cooling liquid and for discharging it. In addition or as an alternative, the laser cutting head may comprise a cooled nozzle carrier carrying the nozzle and having a thermal contact with the nozzle. Such a cooled nozzle carrier may comprise one or more cooling channels for a cooling liquid to circulate and ports for injecting the cooling liquid and to discharge it. The cooling liquid may be cooling water or an other suitable cooling liquid.

The optical aperture may coincide with the nozzle workpiece-side orifice through which the laser beam impinges on the workpiece. Since this is in a position that is the closest possible to the workpiece, the advantages in terms of beam quality are especially high. Alternatively, the optical aperture may be at an axial distance therefrom, i.e., further away from the workpiece than the nozzle workpiece-side orifice (above it). This may be advantageous since due to physical contacts between the nozzle and the workpiece or burrs or debris etc., small damages may be caused at the workpiece-side of the nozzle during operation. If the aperture is not arranged there but at a distance therefrom, the properties of the laser beam will not be influenced by such damages.

In many embodiments, the size of the optical aperture will be too small for the gas jet to be sufficiently strong. Therefore, the laser machining nozzle may in addition to the optical path define at least one gas channel that does not coincide with the beam channel through which the optical path goes, and that does not go through the optical aperture (this does not exclude that gas portions are caused to flow through the aperture in addition to the gas flowing through the separate gas channel or a side branch thereof which is separate from the beam channel).

To this end, the at least one separate gas channel may have a gas ejection orifice (outlet opening) separate from a nozzle workpiece-side orifice through which the laser beam impinges on the workpiece.

In addition or as an alternative, the gas channel may comprise a side branch that opens into the beam channel. Such side branch may open into the beam channel especially on the workpiece-side of (closer to the workpiece than) the optical aperture. Thereby, the nozzle workpiece-side orifice through which both, the laser beam and the gas jet impinge on the workpiece, may have a larger diameter than the optical aperture.

A diameter of the optical aperture may be, depending on the requirements, between 0.5 mm and 2.5 mm, for example between 0.6 mm and 1.5 mm, especially between 0.7 mm and 1.2 mm. The workpiece-side orifice may, if it belongs to the gas channel, have a diameter of 1 mm to 2.5 mm or for certain applications may have a diameter of 1 mm to 10 mm.

In many embodiments, the optical aperture will constitute the location of the beam channel across the laser cutting head at which the diameter is the smallest.

The required laser beam properties may vary depending on the workpiece properties as well as on the nature of the cutting gas used (fusion cutting vs. reactive cutting). To this end, in embodiments the way the optical aperture interacts with the laser beam may be influenced. One possibility to do so is to design the optical aperture as diaphragm with adjustable diameter. However, since the nozzle is usually an expendable item and also because cooling is an issue, in embodiments this is not the case. Rather, in embodiments the nozzle does not comprise any moving parts. Instead, other measures may be taken for influencing the interaction between the laser beam and the optical aperture.

In a group of embodiments, therefore, the laser cutting head may be equipped for the relative position of the optical aperture and a focal position of the laser beam to be adjusted. This may be achieved by the position of the laser machining nozzle being adjustable relative to a cutting head body, and/or by at least one optical element in the beam path having an adjustable position, for example a focusing lens. This combination of an adjustment mechanism with the optical aperture of the laser machining nozzle has special advantages: On the one hand, it makes possible that the laser beam is provided as a uniform small-diameter beam for reactive cutting, by adjusting the parameters in a manner that only the core region of the laser beam goes through the optical aperture. Due to the small distance between the aperture and the workpiece, the resulting beam quality will be high. On the other hand, the adjustment mechanism allows to convey more energy through the aperture by assuming a position in which also a more peripheral region of the laser beam is transmitted through the aperture, while other marginal portions, including side maxima and diffuse parasitic radiation (including scattered radiation) are still efficiently suppressed.

In addition or as an alternative, in embodiments, the nozzle - being exchangeable - may be present in different designs, with an external interface to the laser head body (in particular to a nozzle carrier thereof) being the same for all designs. Between the designs one or more of the following may vary: A diameter of the optical aperture; an axial position of the optical aperture relative to the external interface; an overall axial dimension; a gas channel arrangement; a gas channel diameter; an outlet orifice diameter; etc.

Therefore, in a kit of part that comprises the laser cutting head, especially with a nozzle carrier configured to receive the nozzle by way of a mechanical interface, there is further a plurality of differently designed nozzles all cooperating with the mechanical interface. In the differently designed nozzles, at least one of the above-mentioned properties may be different, especially the diameter of the optical aperture and/or the axial position of the optical aperture relative to the external interface and/or the axial extension.

In general, and independent of this, the optical aperture may have a fix diameter, so that the laser machining nozzle does not have to comprise any moving parts (except for the whole laser machining nozzle being, in embodiments, movable relative to the cutting head body). This avoids a too complicated construction compared to the use of a diaphragm with adjustable diameter.

The laser cutting head may have a cutting head body that carries the interface and, if applicable, the beam shaping installation and at the workpiece side of which the laser machining nozzle is mounted, especially so as to be reversibly removable and exchangeable.

### BRIEF DESCRIPTION OF THE DRAWINGS

Hereinafter, embodiments of the present invention are described in more detail referring to drawings. The drawings are schematic and not to scale. In the drawings, same reference numbers refer to same or similar components. They show:
- Fig. 1:: A laser cutting machine;
- Figs. 2a, 2b: A laser cutting head
- Figs. 3a, 3b: An arrangement with the laser cutting head of Figs. 2a and 2b and a workpiece;
- Fig. 4: An alternative laser cutting head;
- Figs. 5a, 5b: An arrangement with the laser cutting head of Fig. 4 and a workpiece;
- Figs. 6a, 6b: A nozzle in horizontal cross section close to the workpiece-side end thereof, and in vertical cross section, respectively;
- Fig. 7: A further nozzle in vertical cross section; and
- Fig. 8: A part of a laser cutting head with an even further nozzle in vertical cross section.

### DESCRIPTION OF THE PREFERRED EMBODIMENTS

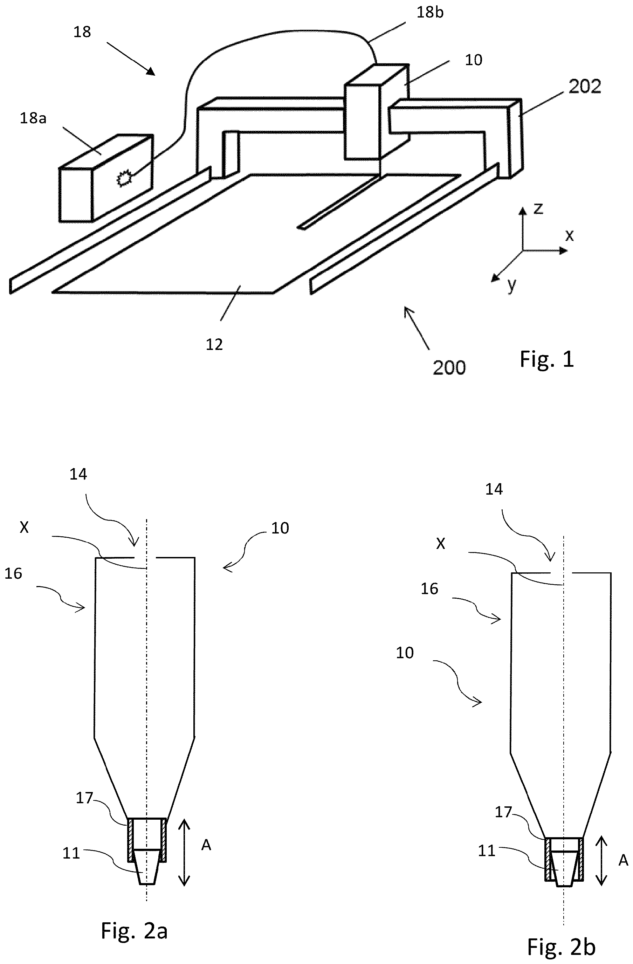

**Figure 1** shows an example of a laser cutting machine 200. The machine comprises a laser source 18 comprising a laser source module 18a and a transport fiber 18b, a laser cutting head 10, and a laser head moving mechanism. A workpiece 12 is supported by a working table (not shown). The laser cutting head moving mechanism comprises a bridge 202 relative to which the laser cutting head 100 is movable in x direction), and which itself is movable, for example on a pair or rails, in y direction relative to the working table and the workpiece 12. The workpiece 12 may be a metal sheet that is cut by a laser beam emitted by the laser cutting head.

In an alternative embodiment, the workpiece may be a tube, and the laser cutting machine may be a tube laser cutting machine.

**Figures 2a and 2b** schematically show an example of a laser cutting head 10. The laser cutting head comprises an interface 14 for the laser source 18, a laser head body 16 that contains a beam shaping installation for shaping the laser beam in a desired manner and, at a workpiece-side end (the lower end in the depicted orientation in which the laser acts from above the workpiece 12), a nozzle 11, namely a laser machining nozzle. The nozzle 11 is mounted in a slidable manner relative to a nozzle carrier 17 as explained in more detail hereinafter, so that a distance A between the nozzle workpiece-side orifice and an upper (upstream-most) end of the nozzle carrier may be varied for influencing the laser beam output on the workpiece.

In the illustrated embodiment, the laser cutting head is illustrated to be symmetrical about its axis X, however, this is not a requirement.

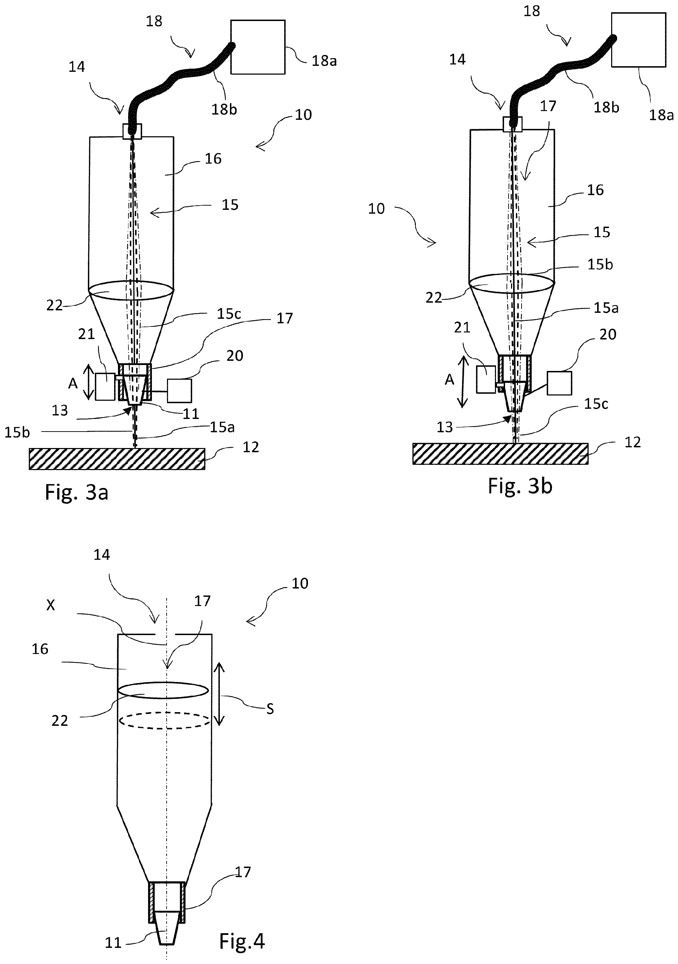

**Figures 3a and 3b** depict the laser cutting head 10 with the laser source 18 coupled to the interface and with a drive 21 serving for moving the nozzle 11 the nozzle relative to the laser head body 16, namely to the nozzle carrier 17 mounted fixedly to the laser head body 16. The relative position of the nozzle determines which regions of the laser beam get through the nozzle 11 and can impinge on the workpiece 12.

In Figs. 3a and 3b, the laser beam 15 is illustrated to have, around a laser beam axis 15a (which in the depicted embodiment at least partly coincides with the laser cutting head axis illustrated in Fig. 2), a core region 15b of highest intensity and an outer region 15c comprising marginal beam portions. Even further outside, to-be-cut-off side maxima as well as scatter radiation (or parasitic radiation) may be present. In the configuration of Fig. 3a, the nozzle 11 is positioned such as to block the outer region of the laser beam from being transmitted, so that only the core region 15b around the beam axis 15a gets onto the workpiece. In Fig. 3b, in contrast thereto, both, the core region 15b and the outer region 15c are directed onto the workpiece, due to the nozzle 11 being in a different position, whereas side maxima and scatter radiation are cut off also.

In the configuration of Figs. 3a and 3b, the laser beam is assumed to be convergent towards the workpiece 12, by means of a suitable focussing device, such as one or more focusing lenses 22. Then, the configuration in which the optical aperture formed by the nozzle 11 cuts off a larger portion of the laser beam 15 if it is in a relative position that is further away from the workpiece side (Fig. 3a) than if it is, more on the workpiece side relative to the laser head body 16 (Fig. 3b), i.e., the position in which only the core region 15b of the laser beam is transmitted to the workpiece 12 - especially suitable for reactive cutting - is the position in which the distance A is smaller, whereas the position in which also the outer region 15c gets to the workpiece 12 is the position in which the distance A is larger. In other embodiments, the laser beam could also be divergent towards the workpiece. In such embodiments, if the laser beam diverges towards the workpiece at the position of the nozzle 11, then the opposite is true: the nozzle 11 cuts off a larger portion of the laser beam if it is further away from the workpiece.

Displacement of the nozzle relative position and/or of the focussing parameters (see Fig. 4 described hereinafter) may serve for a fine tuning of the aperture effect upon the laser beam. For distinguishing between fusion cutting on the one hand (with some of the marginal beam portions being transmitted and only the more peripheral portions such as side maxima, and scatter radiation being cut off) and reactive cutting on the other hand (with more of the marginal beam portions being cut off), usually different nozzles having different aperture diameters will be used.

**Figure 4** shows a variant of the laser cutting head, in which as an alternative to the nozzle being displaceable along the optical axis, or in addition thereto, a focusing element such as a focusing lens 22 is displaceable (arrow S).

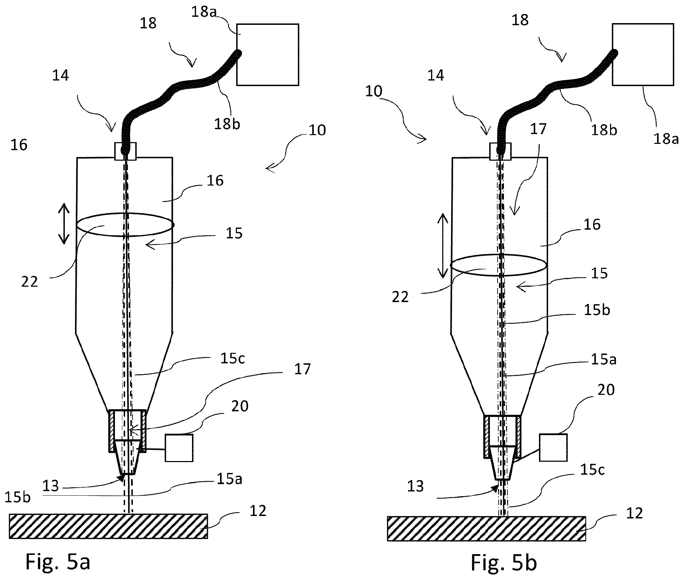

**Figures 5a and 5b** schematically illustrate this principle with the outer region 15c of the laser beam being cut off (Fig. 5a) when the focusing lens 22 is at a first position, and with the outer region 15c of the laser reaching the surface of the workpiece 12 when the focusing lens 22 is at a second, different position.

More in general, an adjustment mechanism will comprise any mechanism for displacing the optical aperture formed by the nozzle and a laser focal point relative to one another, such as anyone or any combination of a drive for moving a focusing device relative to a laser head body, a drive for moving the nozzle relative to a laser head body, a device for moving the interface 14, etc.

In the embodiments of Figs. 2-5, the focusing device was assumed to belong, at least in part, to the laser cutting head. In industrial laser cutting machines, however, the collimation optics is sometimes separated from the unit that is closest to the workpiece and carries the nozzle. It is then customary to designate only this unit closest to the workpiece as "laser cutting head" (or "cutting head"). In this, a collimation unit, and for example a scanner unit (for Dynamic Beam Shaping (DBS)) is/are placed above the laser cutting head and move(s) with the laser cutting head. In such embodiments with a separate collimation unit, a possibility to adjust the position of a focusing plane of the laser beam relative to the optical aperture by adjusting, relative to the collimation unit, an axial position of the entire laser cutting head that carries the nozzle. The effect is effectively the same as the one described referring to Figs. 2-5, with the difference being that the focusing device is not integrated in the laser head body but separate therefrom, above it, and the position of the entire laser head body (and not only the nozzle) and the focusing device/collimation unit being displaceable axially relative to one another, with the nozzle optionally being fixedly (but replaceably) mountable to the laser head body.

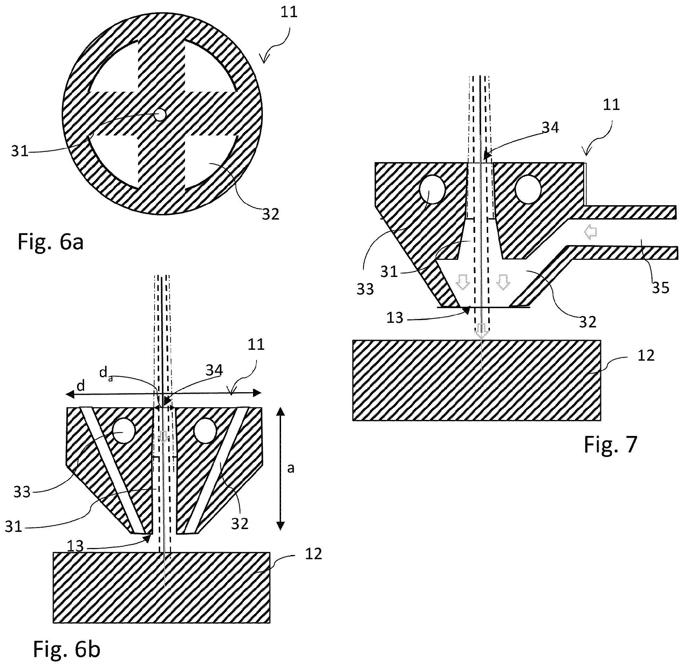

**Figure 6a** shows a schematical horizontal section through an embodiment of nozzle at the workpiece-side end thereof, and **Figure 6b** shows a schematical vertical section through the nozzle 11, together with a workpiece 12. In Fig. 6b, the diameter of the beam channel 31 is shown exaggerated for illustration purposes.

In addition to the beam channel 31 through which the laser beam impinges on the workpiece 12, the nozzle has a plurality of (four in the depicted embodiment) gas channels 32 the diameter if which is sufficient for a sufficiently strong gas jet to be directed onto the workpiece. Further, the nozzle has at least one cooling channel 33 for a cooling liquid to flow through.

In the embodiment of Figs 6a and 6b, the optical aperture 34 consists of the upper (farthest away from the workpiece) end of the beam channel 31 in the nozzle. In embodiments of the kind shown in Figs. 6a and 6b with gas channels separate from the beam channel, however, the optical aperture could be located anywhere along the beam channel in the nozzle, including at its workpiece-side end. Since the beam channel in the nozzle is relatively short compared to the dimension of the whole laser cutting head 10, the exact axial position of the optical aperture within the nozzle does not even have to be exactly defined and can for example be constituted by the entire nozzle.

Generally (not only for the embodiment of Figs. 6a and 6b), the diameter dₐ of the aperture will depend on the requirements and will be between 0.3 mm and 3 mm, especially between 0.5 mm and about 1.5 mm. An axial extension a of the nozzle (or of the beam channel in the nozzle) may be around 8 mm - 70 mm, for example between 10 mm and 60 mm or between 15 mm and 40 mm. The diameter d of the nozzle may for example be at least 10 mm and may be as high as possible due to the circumstances, for example between 10 mm and 80 mm.

**Figure 7** shows an alternative embodiment in which the gas jet is ejected onto the workpiece from the same orifice as the laser beam, i.e., in which the nozzle workpiece-side orifice 13 also belongs to the gas channel 32. In such an embodiment, often the diameter of the orifice and generally of the gas channel 32 has to be larger than the diameter of the optical aperture 34 for a sufficiently strong gas jet to be creatable. Therefore, the gas channel 32 comprises a separate side branch that opens into the beam channel 31 and is connected to a gas supply port 35. The location at which the side branch opens into the beam channel 31 in this may be on the workpiece-side from the optical aperture 34. In the depicted configuration, the optical aperture 34 is again constituted by the upper (away from the workpiece-side) end of the nozzle 11.

In the embodiments of Figs. 6a/6b and 7, the nozzle has, with the exception of the gas channel(s) and the cooling channel(s), a circular symmetry around its axis, which in the nozzle may coincide with the laser beam axis. It is possible, however, that one deviates from such symmetry, for example by designing the nozzle outlet opening 13 in a non-round shape so as to optimize the gas flow therethrough. For special applications, for example in the context of Dynamic Beam Shaping (DBS), it is also not excluded that the aperture itself is non-round, whereas for most embodiments, to ensure a uniform cut thickness, the laser beam, and therefore also the aperture, may have a round cross section.

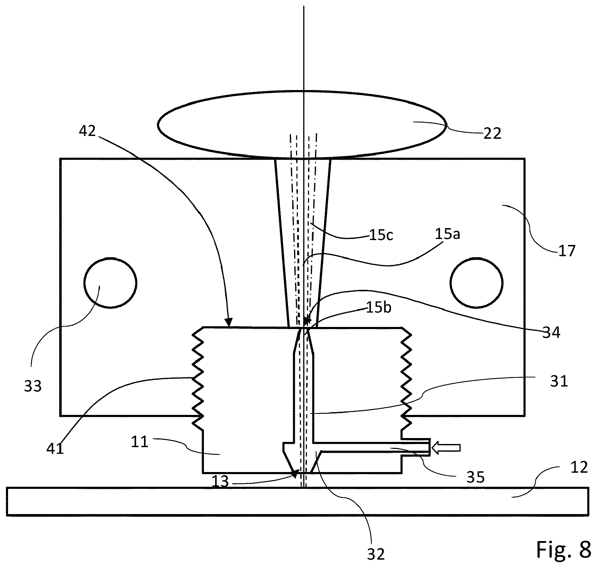

The embodiment of **Figure 8** shows a nozzle based on the principle of the principle described referring to Fig. 7 together with a nozzle carrier 17.

In contrast to the embodiments of Figs. 6a/6b and 7, in the embodiment of Fig. 8, the nozzle is not directly cooled, i.e. it does not have any cooling channels. Rather, the cooling is indirectly by the nozzle carrier having a cooling channel, and by the nozzle 11 being secured to the nozzle carrier - which itself is of a material that is a good thermal conductor, such as a suitable metal - by a good thermal contact. In the embodiment of Fig. 8, this thermal contact on the one hand is established by a planar surface portion 42 of the nozzle 11 abutting against a corresponding surface portion of the nozzle carrier 17. On the other hand, also an outer thread 41 cooperating with a corresponding inner thread of the nozzle carrier is a good thermal conductor.

In the embodiment of Fig. 8, the connection between the nozzle 11 and the nozzle carrier 17 is a screwed connection. Moreover, the thermal contact is complete only if the planar surface portion 42 abuts against the corresponding plane of the nozzle carrier, whereby the relative axial position of the nozzle carrier 17 and the nozzle 11 is defined and cannot be adjusted. If the axial position of the aperture 34 - or its diameter - is to be changed, this can be done by exchanging the nozzle 11 that in embodiments like the one of Fig. 8, by not having any cooling channels and thus not requiring any according port etc. - is of a particularly simple design and can be used as a low-cost expendable item. To this end, a kit of parts may comprise in addition to the laser head body 16 that has the nozzle carrier 17, a plurality of nozzles, for example of different dimensions, aperture sizes and/or aperture axial positions. However, also in embodiments as illustrated in Fig. 8, the effect of the aperture 34 could in addition be fine tuned by a combination of varying the distance between the laser cutting head (carrying the nozzle 11) and the workpiece and also of the focal position so that effectively the beam is moved relative to the nozzle 11 having the aperture 34.

In addition or as an alternative to providing the nozzle as expendable item (and of allowing for different nozzles) the nozzle may also be mounted to be displaceable also in embodiments with indirect cooling. To this end, the parts may be dimensioned for the thermal contact via a thread (or similar) to be sufficient, to have a spring-loaded thermal contact, or any other suitable means.

In addition or as an alternative to being mounted by a being screwed into a receiving thread of the nozzle carrier, the nozzle may also be fastened by other means, including a plugged connection, a snap-on mounting, a bayonet coupling, a separate fastener (such as a screw r the like), etc.

In the embodiment of Fig. 8, the nozzle is illustrated to comprise gas supply port 35 for a gas conduit (hose or the like) to be coupled thereto. Alternatively, the nozzle carrier may comprise a nozzle carrier gas conduit and the nozzle carrier and the nozzle may comprise a gas coupling, whereby the gas is supplied to the nozzle's gas channel via the nozzle carrier. Also, in such an embodiment, the gas channel may be at least partially separate from the beam channel, i.e., it may have a separate orifice (in analogy to the configuration of Fig. 6b) or a may have a side branch opening into the beam channel (like in the configuration of Fig. 7).

The embodiment of Fig. 8 in addition to the features discussed above also illustrates the principle that it is an option that the beam properties of the laser beam may be adjusted by choosing and mounting the appropriate nozzle 11 out of a choice of different nozzles. In the embodiment of Fig. 11, the optical aperture 34 is illustrated to be relatively small and relatively close to the focusing lens 22 such as to cut off the outer region 15c of the laser beam. By choosing a nozzle with an optical aperture of different size or of a different axial position, this may be changed. The inner thread of the nozzle carrier serves as mechanical interface for receiving the different nozzles of different designs (but with identical outer thread 41 and planar surface portion 42).

## Claims

1. A laser cutting machine (200), comprising a cutting head (10), a laser source (18), and a workpiece support, the machine being equipped for causing a relative movement between the cutting head (10) and the workpiece support and being equipped to emit a laser beam (15) from the cutting head for making a controlled cut in a workpiece (12) supported by the support, the cutting head (10) comprising a laser machining nozzle (11) equipped to eject a gas jet onto the workpiece (12), a beam path of the laser beam (15) going through a beam channel (31) of the laser machining nozzle (11), **characterized in that** the laser machining nozzle (11) comprises an optical aperture (34) for stopping marginal radiation portions, wherein the beam path of the laser beam (15) through the nozzle to the workpiece (12) runs through the optical aperture (34).

2. The laser cutting machine according to claim 1, wherein the laser machining nozzle (11) is formed in one piece with no moving parts.

3. The laser cutting machine according to claim 1 or 2, comprising a cooling device (20) for actively cooling the laser machining nozzle (11).

4. The laser cutting machine according to claim 3, wherein the cooling device (20) comprises a cooling liquid supply to the laser machining nozzle and/or wherein the laser cutting machine comprises a nozzle carrier (17) carrying the laser machining nozzle (11), the cooling device equipped to supply a cooling liquid to the nozzle carrier (17).

5. The laser cutting machine according to any one of the previous claims, wherein the laser machining nozzle comprises a gas channel (32) at least partially separate from the beam channel (31).

6. The laser cutting machine according to claim 5, wherein the gas channel (32) has a side branch opening into the beam channel (31) on a workpiece-side of the optical aperture (34).

7. The laser cutting machine according to any one of the previous claims, wherein the optical aperture (34) is at an axial distance from a nozzle workpiece-side orifice (13).

8. The laser cutting machine according to any one of the previous claims, wherein a position of a focusing plane of the laser beam (15) relative to the optical aperture (34) is adjustable.

9. The laser cutting machine according to claim 8, wherein a position of the laser machining nozzle (11) relative to a laser head body (16) is adjustable.

10. The laser cutting machine according to claim 8 or 9, wherein a position of a focusing device (22) relative to a laser head body (16) is adjustable.

11. The laser cutting machine according to any one of the previous claims, wherein the laser machining nozzle (11) is exchangeable.

12. A laser cutting head for a laser cutting machine according to any one of the previous claims, the laser cutting head comprising an interface (14) for receiving laser radiation and a radiation directing arrangement for directing a laser beam (15) received at the interface (14) onto a workpiece (12), and further comprising a laser machining nozzle (11) equipped to eject a gas jet onto the workpiece, a beam path of the laser beam (15) going through a beam channel (31) of the laser machining nozzle (11), **characterized in that** the laser machining nozzle (11) comprises an optical aperture (34) for stopping marginal radiation portions, wherein the beam path of the laser beam (15) through the nozzle to the workpiece (12) runs through the optical aperture (34).

13. A kit of parts, comprising the laser cutting head (10) according to claim 12, the laser cutting head (10) comprising a laser head body (16) configured to receive the laser machining nozzle (11), the kit of parts further comprising a plurality of laser machining nozzles (11) with optical apertures (34) at different axial positions and/or of different diameters.

14. The kit of parts according to claim 13, wherein the laser head body (16) is configured to receive the laser in a well-defined axial position relative to the laser head body (16).
